# EUROPÄISCHE PATENTSCHRIFT

(11) **EP 2 923 246 B1**
(45) Veröffentlichungstag und Bekanntmachung des Hinweises auf die Patenterteilung: **11.04.2018**
(21) Anmeldenummer: 13815680.7
(22) Anmeldetag: 21.11.2013
(51) Int. Cl.: G05D 11/13, B01F 15/00, B01F 15/02, B01F 15/04

(54) **MISCHANLAGE FÜR VISKOSE FLÜSSIGKEITEN**
MIXING SYSTEM FOR VISCOUS LIQUIDS
INSTALLATION DE MÉLANGE POUR LIQUIDES VISQUEUX

(30) Priorität: 21.11.2012 AT 12332012
(43) Veröffentlichungstag der Anmeldung: 30.09.2015
(73) Patentinhaber: Waizenauer, Dietmar, 4531 Kematen an der Krems (AT); Waizenauer, Bernhard, 4511 Allhaming (AT)
(72) Erfinder: Waizenauer, Dietmar, 4531 Kematen an der Krems (AT); Waizenauer, Bernhard, 4511 Allhaming (AT)
(74) Vertreter: Ellmeyer, Wolfgang
(86) Internationale Anmeldenummer: PCT/AT2013/050225
(87) Internationale Veröffentlichungsnummer: WO 2014/078883

(56) Entgegenhaltungen:
- EP-A2- 0 457 486
- EP-A2- 1 391 236
- EP-A2- 2 312 277
- WO-A1-96/23580
- WO-A1-2011/037530
- DE-A1- 2 104 869
- FR-A3- 2 739 467
- JP-A- 2000 218 148
- JP-A- 2007 175 691

## Beschreibung

### Stand der Technik

Die am Markt befindlichen Förder- bzw. Mischanlagen arbeiten mit Schöpfkolbenpumpen als Fördereinheit. Angetrieben werden diese abhängig vom Hersteller pneumatisch, hydraulisch oder elektrisch. Das Material wird mittels Förderpumpen aus den Materialfässern entnommen und über Schlauchleitungen einer Verarbeitungseinheit zugeführt. Diese besteht aus einem Mischblock mit Rückschlagventilen für jede Komponente, einem gemeinsamen Druckreduzierventil und einer Absperreinheit, welche den gemischten Materialstrom zum Produktionsprozess absperrt. Somit sind Fördereinheit und Abgabeeinheit an den entgegengesetzten Enden der Transportleitung vorhanden.

Das Mischungsverhältnis an der Verarbeitungseinheit wird durch die Veränderung des Förderdruckes jeder einzelnen Komponente verändert. Die exakteren Systeme haben volumetrische Messeinrichtungen, welche herstellerabhängig vor der Verarbeitungseinheit oder nach den Förderpumpen montiert sind. Bei jedem dieser Systeme sind zwischen Messeinrichtung (Sensor), dem geregeltem Förderer (Aktor) und der Verarbeitungseinheit (Ort, an dem die Mischung stattfindet) unterschiedliche Transportwege in Form von Zuführschläuchen und Hydraulikarmaturen vorhanden, welche eine gewisse Länge aufweisen. Die Zuführschläuche haben aufgrund der Schlauchdehnung und der Komprimierbarkeit des darin befindlichen Fördergutes Energie gespeichert, welche sich in der Regelung als Totzeitglied definieren lässt. Die Parameter dieses Totzeitgliedes sind abhängig von der Viskosität des Materials, Schlauchdehnung, Schlauchlänge und Strömungswiderstände in den Hydraulikverschraubungen und Armaturen. Die Regelung lässt sich schwer bzw. nur sehr ungenau umsetzen, da die Regelstrecke mathematisch in der Praxis schwierig modellierbar ist. PI- oder PID-Regler können auf verändernde Materialeigenschaften nur sehr schwer reagieren und müssen materialabhängig angepasst werden, um eine gute bzw. genügende Funktion zu erreichen.

Eine Sonderform einer Mischanlage sind zum Beispiel direkt an der Verarbeitungseinheit aufgebaute Kolbendosierer, welche das Material wie eine Spritze aufdosieren (jede Komponente einzeln) und diese geregelt mit je einem Servoantrieb direkt zusammenmischen. Die Volumina werden je Komponente zusätzlich mit Durchflusssensoren gemessen. Das Additiv wird z.B. mittels eines Farbtaktventils zum Volumenstrom diskontinuierlich beigemengt. Dieser Aufbau ist derzeit der präziseste am Markt. Dieser Mischvorgang ist nicht kontinuierlich, da das Volumen der Kolben begrenzt ist. Die Additivbeigabe ist nicht überwacht. Je nach Anwendung muss das richtige Kolbenvolumen gewählt werden. Der Aufbau ist kompliziert und hat ein sehr hohes Gewicht. Zusätzlich ist dieser Aufbau sehr kostenintensiv in der Anschaffung. Dieses Konzept findet derzeit bei Anwendungen Einsatz, wo sehr genaue Mischungsverhältnisse gefordert sind.

Grundsätzlich gibt es Förderanlagen mit festem Mischungsverhältnis und mit variablem Mischungsverhältnis.

### Konstantes Mischungsverhältnis 1:1:

Die Schöpfkolbenpumpen werden mechanisch/hydraulisch oder elektrisch gekoppelt, damit diese zu jedem Zeitpunkt dieselbe Position und auch Umschaltzeitpunkt besitzen. Da die Viskosität von Komponente A und Komponente B herstellerabhängig stark differieren kann, besteht die Möglichkeit, dass das Mischungsverhältnis abweicht. In der Umschaltphase der Schöpfkolbenpumpe kann das Mischungsverhältnis stark abweichen, da die Fördereinheiten in dieser Stellung undefiniert Material fördern. Zusätzlich dazu kann auf ungleich gefüllte Materialgebinde kein Einfluss genommen werden und große Mengen an Material von einer Komponente übrig bleiben.

### Variables Mischungsverhältnis:

Bei variablen Mischungsverhältnissen besteht zusätzlich die Möglichkeit, dass der Füllstand der Fässer die Fördermenge je Komponente beeinflusst, damit die Behälter sich gleichmäßig entleeren. Um ein variables Mischungsverhältnis einzustellen, sind die Fördereinheiten von Komponente A und Komponente B nicht miteinander gekoppelt. Herstellerabhängig werden volumetrische Messeinrichtungen zur Regelung in den Schlauchleitungen angebracht. Diese sind direkt an der Förderanlage oder an der Verarbeitungseinheit platziert. Das Stellglied ist bei den bisherigen Systemen die Förderpumpe, welche den Druck variiert, um das Mischungsverhältnis zu ändern. Der Förderdruck bei derzeitigen Systemen liegt bei ca. 150-200 bar abhängig von der Viskosität und Schlauchlänge. Für einen konstanten Förderdruck wird am Ende der Schlauchleitung nach der Vereinigung der beiden Komponenten ein Druckreduzierventil verbaut, welches den Anlagendruck auf konstant z.B. 50 bar reduziert.

### Additivbeimengung

Stand der Technik ist die Beimengung mittels Farbventilen, wobei eine gewisse Menge Additiv zum Volumenstrom in Abständen (diskontinuierlich) hinzudosiert wird. Dabei wird ein Kolben mit Additiv aufdosiert und anschließend dem Volumenstrom getaktet (eingespritzt). Das Volumen, welches zeitlich beigemengt wird, ist abhängig von dem jeweiligen Dosierweg und dem Dosierkolbendurchmesser. Dieser Dosierhub bzw. Kolbendurchmesser muss mechanisch an die Anwendung angepasst werden (einstellbarer Hub). Ob sich die Kolbenkammer bei dem Dosiervorgang vollständig gefüllt hat bzw. ob das eingespritzte Material wirklich in den Volumenstrom eingebracht wurde, wird nicht kontrolliert. Da sich in den Farbventilen Rückschlagventile befinden, kann davon ausgegangen werden, dass diese viskositätsabhängig verschiedene Öffnungs- und Schließverhalten aufzeigen. Zusätzlich dazu gibt es Probleme, wenn diese Systeme nicht entlüftet sind oder kein Materialdruck an dem Farbventil ansteht.

Derzeit wird bei den meisten Herstellern das Farbventil getaktet und mit einem einstellbaren Prozentanteil dem Volumenstrom an der Verarbeitungseinheit beigemengt. Der aktuelle Materialfluss wird über die Schöpfkolbenposition (durch Errechnen des Volumenstroms) oder mittels Durchflusssensoren ermittelt. Da zwischen Farbventil und Messeinrichtung (bzw. bei Errechnen des Volumens die Förderpumpe) Materialschläuche bzw. eine Förderstrecke dazwischen liegt, welche sich wie ein Speicher bzw. ein Totzeitglied verhalten, ist bei sehr kleinen Dosiermengen die Beimengung des Additives sehr ungenau und nicht kontinuierlich. Über eine sehr lange Zeit gemessen bzw. bei größeren Dosiervolumen kann diese Art der Beimengung eine bessere Genauigkeit erzielen. In jedem dieser Fälle ist die Beimengung nicht kontinuierlich und nicht nachvollziehbar. Es kann nicht zu jedem Zeitpunkt die genaue Beimengung garantiert werden.

FR2739467A3 beschreibt eine Vorrichtung zum Dosieren von zwei oder mehr Flüssigkeiten, die Folgendes umfasst: zwei oder mehr Flüssigkeitszufuhren, die jeweils einen Durchflussmesser umfassen, eine Vorrichtung zum Messen der Durchflussrate, eine Kontrolleinheit, die mit dem Durchflussmesser und der Vorrichtung zum Messen der Durchflussrate verbunden ist, und eine Vorrichtung zum selektiven Bedienen der Durchflussmesser. Abstände zwischen den einzelnen Elementen sind nicht angeführt.

EP0457486A2 beschreibt eine Vorrichtung zur Zufuhr einer Flüssigkeit mit einer konstanten Temperatur durch Mischen von zwei Wasserzufuhren. Die Kontrolle der Temperatur erfolgt durch Messen der Durchflussrate in einer oder beiden Zufuhren durch Durchflussmesser und motorbetriebene Ventile. Abstände zwischen den einzelnen Elementen sind nicht angeführt.

JP2007175691A beschreibt eine Mischvorrichtung für Flüssigkeiten, die zwei Zufuhrleitungen aufweist, die ein erstes und ein zweites Flüssigkeitskontrollventil, ein Durchflussmessgerät und einen Kontrollteil aufweisen, wobei das erste Flüssigkeitskontrollventil den Druck der Flüssigkeit regelt und das zweite Flüssigkeitskontrollventil den Durchfluss der Flüssigkeit regelt. Abstände zwischen den einzelnen Elementen sind nicht angeführt.

WO2011037530A1 beschreibt eine Mischanlage für Flüssigkeiten, die mehrere Leitungen aufweist, die jeweils ein Ventil, eine Pumpe und einen Durchflussmesser aufweisen. Abstände zwischen den einzelnen Elementen sind nicht angeführt.

EP1391236A2 beschreibt eine Vorrichtung zum Mischen zweier Fluide, die zwei Fluidleitungen aufweist, die ein Durchfluss-Stellgerät, einen Durchflussregler und ein Durchflussmessgerät aufweisen. Abstände zwischen den einzelnen Elementen sind nicht angeführt.

EP2312277A2 beschreibt ein Flüssigkeitszufuhrsystem, das eine Durchflussregelvorrichtung und ein Coriolis-Massendurchflussmessgerät in Kommunikation mit der Durchflussvorrichtung aufweist. Eine Durchflussregelvorrichtung kann ein Ventil sein. Abstände zwischen den einzelnen Elementen sind nicht angeführt.

JP2000218148A beschreibt eine Mischvorrichtung mit drei Zufuhrleitungen, die Ultraschall-Vortex-Durchflussmesser und luftbetriebene Ventile aufweisen. Abstände zwischen den einzelnen Elementen sind nicht angeführt.

DE2104869A1 beschreibt eine Vorrichtung zur Herstellung von Mischungskonzentrationen definierter Endwerte aus zwei flüssigen Komponenten von bekannter Anfangskonzentration. Die Leitungen weisen einen Temperaturmesser, einen Druckmesser und ein Mengenregelventil auf. Es ist kein Durchflusssensor vorhanden. Abstände zwischen den einzelnen Elementen sind nicht angeführt.

WO9623580A1 beschreibt eine Vorrichtung zum Dosieren und Mischen von viskosen Substanzen. Die Vorrichtung enthält diverse Ventile und Pumpen. Abstände zwischen den einzelnen Elementen sind nicht angeführt.

Ziel der Erfindung ist es, eine Mischanlage bereitzustellen, die die Nachteile der ungenauen Steuerung der diversen Komponenten überwindet.

Erfindungsgemäß wird dies dadurch erreicht, dass eine Mischanlage bereitgestellt wird, die zumindest zwei Leitungen, die sich in einer Vereinigungsstelle zu einer Leitung vereinigen, umfasst, wobei zumindest eine der Leitungen ein Drosselventil und einen Durchflusssensor aufweist und das Drosselventil und der Durchflusssensor in beliebiger Reihenfolge in enger räumlicher Nähe angeordnet sind.

Eine solche Mischanlage kann das Mischungsverhältnis zu jederzeit für jede Komponente und Additiv exakt garantieren, eine pulsationsarme, volumetrische Förderleistung aufweisen und kontinuierlich einen unbegrenzten Materialfluss fördern. Die Förderung erfolgt durch das Prinzip "first in, first out", d.h. die zuerst eingeleitete Flüssigkeit wird auch als erste wieder ausgeleitet. Dies ist ebenfalls ein Vorteil dieser Mischanlage. Das Mischungsverhältnis soll frei wählbar sein. Die Regelstrecke zwischen Aktor (Drosselventil) und dem Sensor (Durchflusssensor) wird auf das Minimum reduziert, somit entfallen nahezu alle Störfaktoren und Totzeitglieder der Regelstrecke. Es entsteht ein sehr schneller Regelkreis, welcher auf die geringsten Änderungen sofort reagieren kann. Das Mischungsverhältnis wird direkt am Mischblock eingestellt und ist sehr nahe am endgültigen Verarbeitungsprozess positioniert. Durch diese Anlage wird die Mischung zu jedem Zeitpunkt an der Mischstelle garantiert.

"In enger räumlicher Nähe" bedeutet in einem Abstand von max. 100 cm, vorzugsweise in einem Abstand von max. 50 cm, 40 cm, 30 cm, 20 cm, 10 cm oder 5 cm. Mit "Abstand" ist die Länge der Leitung zwischen dem Drosselventil und dem Durchflusssensor gemeint.

"In beliebiger Reihenfolge" bedeutet, dass in Förderrichtung entweder zuerst das Drosselventil und dann der Durchflusssensor angeordnet ist oder dass in Förderrichtung entweder zuerst der Durchflusssensor und dann das Drosselventil angeordnet ist. Beide Reihenfolgen sind in gleichem Maße für das Mischen geeignet.

Zusätzlich dazu kann auf die Absperreinheit verzichtet werden, da die Drosselventile den Volumenstrom komplett absperren können. Ebenso kann auf Rückschlagventile verzichtet werden, da die Fließrichtung der einzelnen Komponenten mittels Durchflusssensoren gemessen wird und ein gegebenenfalls detektiertes Rückfließen durch das Drosselventil verhindert werden kann. Es entsteht ein mechanisch einfacher, leichter, platzsparender, kompakter und kostengünstiger Aufbau, welcher mit wenigen mechanischen Bauteilen auskommt und die Genauigkeit der derzeit am Markt befindlichen Systeme übertrifft. Die Komponenten welche mit dem abgemischten Material in Berührung kommen, sind vermindert, somit ist der Wartungsaufwand geringer.

Die Additivbeimengung wird gemessen und kann mitprotokolliert werden bzw. wird dokumentiert. Die Additivbeigabe erfolgt kontinuierlich und nicht wie bei derzeitigen Systemen getaktet.

Es können auch konventionelle Farbtaktventile aufgebaut werden, welche die Additive direkt in den Mischblock fördern. Es kann eine genauere Beimengung erfolgen, da die aktuellen Volumenströme der Hauptkomponenten zu jeder Zeit gemessen werden und das Additiv in Echtzeit an der Mischstelle beigemengt wird.

Diese Mischanlage kann bei bestehenden Anlagen nachgerüstet werden und als Stand-Alone oder als Komplettanlage mit Förderpumpen eingesetzt werden. Die Art der Zuführpumpe wie z.B. eine Zahnradpumpe oder eine Exzenterschneckenpumpe oder eine Schöpfkolbenpumpe oder eine Schraubspindelpumpe oder jede andere Förderpumpe und die Antriebsart dieser ist frei wählbar und unabhängig voneinander. Um die größte Genauigkeit zu erhalten, sollte ein konstanter Zuführdruck vorliegen. Das Anpassen des Mischungsverhältnisses anhand des Füllstandes der Materialfässer kann zusätzlich integriert werden (beide Fässer sind am Ende komplett entleert).

Wenn zwei Materialien mit demselben Zuführdruck vermengt werden und dazu das gemessene Fördervolumen abgeglichen wird, wird ein sehr exaktes Mischungsverhältnis, unabhängig von der unterschiedlichen Viskosität der Materialien, erreicht.

In einer Ausführungsform kann jede Leitung ein Drosselventil und einen Durchflusssensor aufweisen und das Drosselventil und der Durchflusssensor in beliebiger Reihenfolge in enger räumlicher Nähe angeordnet sein. Sind in jeder Leitung ein Durchflusssensor und ein Drosselventil angeordnet, kann in jeder Leitung exakt die Menge bestimmt werden, wodurch eine noch genauere Mischung erreicht wird.

In einer anderen Ausführungsform der Erfindung kann der Abstand zwischen Drosselventil und Durchflusssensor definiert sein als Verhältnis von Länge zu Durchmesser der Leitung und max. 70:1, vorzugsweise max. 50:1, insbesondere max. 30:1, betragen. Diese Verhältnisse geben an, wie lange die Leitung im Verhältnis zum Durchmesser maximal sein darf. Bei einem solchen Verhältnis von Länge zu Durchmesser der Leitung von 70:1 kann eine ausgezeichnete Mischung erreicht werden. Bei einer Leitungslänge von 1 m beträgt der Durchmesser maximal 14,3 mm. Bevorzugt wird ein Verhältnis von 50:1 und insbesondere 30:1, bei welchen die Mischung noch besser erfolgt. Das Verhältnis kann auch maximal 60:1, maximal 40:1, maximal 20:1 oder maximal 10:1 oder maximal 5:1, 4:1, 3:1, 2:1 oder maximal 1:1 betragen.

In einer Ausführungsform der Erfindung können der Durchflussmesser und das Drosselventil in beliebiger Reihenfolge unmittelbar aneinander anschließend angeordnet sein. Dies ist der kürzest mögliche Abstand und ergibt eine schnelle Regelung der Durchflussmenge durch Einstellen des Drosselventils. Der Durchflussmesser kann beispielsweise in Fließrichtung unmittelbar vor dem Drosselventil angeordnet sein, oder der Durchflussmesser kann beispielsweise in Fließrichtung unmittelbar nach dem Drosselventil angeordnet sein. Diese Anordnung kann auch einstückig ausgeführt sein, z.B. in einem Stahlblock verbohrt.

In einer anderen Ausführungsform der Erfindung kann die Vereinigungsstelle der zumindest zwei Leitungen zu einer Leitung in enger räumlicher Nähe zu dem Drosselventil bzw. dem Durchflusssensor angeordnet sein. Durch die räumliche Nähe, die einen Abstand voneinander von max. 100 cm, vorzugsweise einen Abstand von max. 50 cm, 40 cm, 30 cm, 20 cm, 10 cm oder 5 cm bedeutet, entfällt wiederum das Totzeit-Problem einer langen Leitung, wodurch eine effiziente und genaue Mischung erreichbar ist. Mit "Abstand" ist die Länge der Leitung zwischen dem Drosselventil und dem Durchflusssensor sowie die Länge der Leitung zwischen dem Drosselventil bzw. Durchflusssensor und der Vereinigungsstelle gemeint.

In einer Ausbildung der Erfindung kann der Abstand zwischen der Vereinigungsstelle der zumindest zwei Leitungen (1, 2) zu einer Leitung (3) und dem Drosselventil (4) bzw. dem Durchflusssensor (5) definiert sein als Verhältnis von Länge zu Durchmesser der Leitung (1, 2) und max. 70:1, vorzugsweise max. 50:1, insbesondere max. 30:1, betragen. Diese Verhältnisse geben an, wie lange die Leitung im Verhältnis zum Durchmesser maximal sein darf. Bei einem solchen Verhältnis von Länge zu Durchmesser der Leitung von 70:1 kann eine ausgezeichnete Mischung erreicht werden. Bei einer Leitungslänge von 1 m beträgt der Durchmesser maximal 14,3 mm. Bevorzugt wird ein Verhältnis von 50:1 und insbesondere 30:1, bei welchen die Mischung noch besser erfolgt. Das Verhältnis kann auch maximal 60:1, maximal 40:1, maximal 20:1 oder maximal 10:1 oder maximal 5:1, 4:1, 3:1, 2:1 oder maximal 1:1 betragen.

In wiederum einer anderen Ausführungsform kann die Vereinigungsstelle der zumindest zwei Leitungen zu einer Leitung unmittelbar anschließend an das Drosselventil bzw. den Durchflusssensor angeordnet sein. Dadurch entfällt das Totzeit-Problem einer langen Leitung, wodurch eine effiziente und genaue Mischung erreichbar ist.

In einer anderen Ausführungsform kann der Durchflusssensor ein Mengenmesser oder ein Durchflussmesser oder ein Differenzialdruck-Durchflusssensor sein. Es sind vielfältige Durchflusssensoren auf dem Gebiet der Erfindung bekannt. Durchflusssensoren werden eingeteilt in Mengenmesser (Volumenzähler) und Durchflussmesser. Zu den Mengenmessern (Volumenzählern) zählt man unmittelbare Zähler (Verdrängungszähler), wie z.B. Ovalradzähler, Ringkolbenzähler oder Drehkolbenzähler, und mittelbare Zähler, wie z.B. Turbinenradzähler, Flügelradzähler, Woltmanzähler, Schraubenradzähler, Wirbel-Durchflussmesser oder Drall-Durchflussmesser. Zu den Durchflussmessern zählt man Volumendurchflussmesser, wie z.B. Wirkdruck-Messverfahren, Schwebekörper-Durchflussmesser, magnetische Induktions-Durchflussmesser oder Ultraschall-Durchflussmesser, und Massendurchflussmesser, wie z.B. Coriolis-Massendurchflussmesser oder thermische Massendurchflussmesser. Ein Differenzialdruck-Durchflusssensor misst den Druck vor und nach dem Drosselventil und schließt aus der Differenz der Drücke auf die Menge, die durchfließt, zurück. Die Begriffe "in enger räumlicher Nähe, "Abstand" und "Verhältnis von Länge zu Durchmesser der Leitung" beziehen sich bei einem Differenzialdruck-Durchflusssensor auf den Abstand zwischen dem Drosselventil und dem Druckmessgerät, das in Fließrichtung der Flüssigkeit vor dem Drosselventil angeordnet ist, und auf den Abstand zwischen dem Drosselventil und dem Druckmessgerät, das in Fließrichtung der Flüssigkeit nach dem Drosselventil angeordnet ist; somit sind beim Differenzialdruck-Durchflusssensor zwei Abstände zu beachten, die beide den obigen Anforderungen genügen müssen.

In einer Ausführungsform der vorliegenden Erfindung kann zumindest eine weitere Leitung vorgesehen sein, die in die Leitung oder die Leitung mündet. Mithilfe dieser zusätzlichen Leitung können noch weitere Flüssigkeiten hinzugemischt werden.

In einer anderen Ausbildung der Erfindung kann die zumindest eine weitere Leitung, die in die Leitung oder die Leitung mündet und einen Durchflusssensor und ein Drosselventil oder eine Pumpe aufweist, die in beliebiger Reihenfolge in enger räumlicher Nähe, wobei vorzugsweise der Abstand zwischen Drosselventil und Durchflusssensor definiert ist als Verhältnis von Länge zu Durchmesser der Leitung und max. 70:1, vorzugsweise max. 50:1, insbesondere max. 30:1, beträgt, und insbesondere unmittelbar aneinander anschließend, angeordnet sein. Eine solche Leitung eignet sich ganz hervorragend zur Zumischung von Additiven. "In enger räumlicher Nähe" ist wie oben stehen definiert. Die Verhältnisse geben an, wie lange die Leitung im Verhältnis zum Durchmesser maximal sein darf. Bei einem solchen Verhältnis von Länge zu Durchmesser der Leitung von 70:1 kann eine ausgezeichnete Mischung erreicht werden. Bei einer Leitungslänge von 1 m beträgt der Durchmesser maximal 14,3 mm. Bevorzugt wird ein Verhältnis von 50:1 und insbesondere 30:1, bei welchen die Mischung noch besser erfolgt. Das Verhältnis kann auch maximal 60:1, maximal 40:1, maximal 20:1 oder maximal 10:1 oder maximal 5:1, 4:1, 3:1, 2:1 oder maximal 1:1 betragen.

In wiederum einer anderen Ausbildung der Erfindung kann der Durchflusssensor und das Drosselventil oder die Pumpe in der zumindest einen weiteren Leitung in enger räumlicher Nähe zur Leitung oder zur Leitung, wobei vorzugsweise der Abstand zwischen Drosselventil (4) und Durchflusssensor (5) oder der Pumpe zur Leitung (1, 2) oder zur Leitung (3) definiert ist als Verhältnis von Länge zu Durchmesser der Leitung (1, 2) oder der Leitung (3) und max. 70:1, vorzugsweise max. 50:1, insbesondere max. 30:1, beträgt, und insbesondere unmittelbar aneinander anschließend, angeordnet sein. Durch die Anordnung in räumlicher Nähe oder unmittelbar aneinander anschließend entfällt das Totzeit-Problem einer langen Leitung, wodurch eine effiziente und genaue Mischung erreichbar ist. Die Verhältnisse geben an, wie lange die Leitung im Verhältnis zum Durchmesser maximal sein darf. Bei einem solchen Verhältnis von Länge zu Durchmesser der Leitung von 70:1 kann eine ausgezeichnete Mischung erreicht werden. Bei einer Leitungslänge von 1 m beträgt der Durchmesser maximal 14,3 mm. Bevorzugt wird ein Verhältnis von 50:1 und insbesondere 30:1, bei welchen die Mischung noch besser erfolgt. Das Verhältnis kann auch maximal 60:1, maximal 40:1, maximal 20:1 oder maximal 10:1 oder maximal 5:1, 4:1, 3:1, 2:1 oder maximal 1:1 betragen.

In einer anderen Ausführungsform der Erfindung kann die Flüssigkeit eine Viskosität im Bereich von 5.000 mPa.s bis 3.000.000 mPa.s aufweisen. D.h. die Mischanlage ist für eine Flüssigkeit mit einer Viskosität im Bereich von 5.000 mPa.s bis 3.000.000 mPa.s geeignet. Solche Flüssigkeiten sind für industrielle Anwendungen besonders bevorzugt. Additive können beispielsweise eine Viskosität von 5.000 mPa.s bis 300.000 mPa.s aufweisen.

In einer Ausbildung der Erfindung kann das Drosselventil durch eine Pumpe oder eine Digitalhydraulik ersetzt sein. Dabei wirkt diese Pumpe gleich wie ein Drosselventil als Drosselstelle und kann den Systemdruck erhöhen oder auch verringern. Diese Pumpe ersetzt nicht die Förderpumpe an den Materialbehälter, die den Systemdruck erzeugt. In solch einer räumlichen Nähe der Pumpe zum Durchflusssensor oder durch das unmittelbare Angrenzen der Pumpe an den Durchflusssensor ist es möglich, mithilfe einer Pumpe ebenfalls eine hervorragende Mischung zu erreichen, und zwar ohne Störeinflüsse wie große Leitungslängen oder Hydraulikarmaturen (Totzeitglieder). Digitalhydraulik bezeichnet ein Ventil, das nur zwei Schaltungen einnehmen kann: ein oder aus. Somit entsteht eine pulsierende Förderung, wobei sich die Digitalhydraulik mit zunehmender Frequenz der Steuerung einer kontinuierlichen Förderung angleicht, da die Schaltzeiten so kurz werden, dass die Unterschiede zwischen Fördern und Nicht-Fördern zu klein werden, um nachweisbar zu sein. Schaltzeiten von 5 Hz ergeben eine pulsationsarme Dosierung, und wird die Schaltzeit noch weiter erhöht, z.B. auf 10 Hz oder höher, z.B. 20 Hz, 30 Hz, 40 Hz, 50 Hz oder 100 Hz, wird eine im Wesentlichen pulsationsfreie Dosierung erreicht.

In einer Ausführungsform der Erfindung kann die Mischanlage zusätzlich Folgendes umfassen:
zumindest zwei Behälter, in denen sich jeweils eine Flüssigkeit befindet,
zumindest zwei Pumpen zum Befördern der Flüssigkeiten,
eine Folgeplatte für einen Behälter, die auf der Flüssigkeitsoberfläche aufliegt und dichtend mit dem Behälter abschließt,
wobei die Leitungen an die Pumpen in Förderrichtung anschließen.

Mit diesen zusätzlichen Bestandteilen steht eine vollständig einsatzbereite Mischanlage zur Verfügung. Klarerweise werden die Behälter mit der Flüssigkeit angeliefert und dann in die Mischanlage eingefügt.

In einer Ausführungsform können die Pumpen Zahnradpumpen oder Exzenterschneckenpumpen oder Schöpfkolbenpumpen oder Schraubspindelpumpen sein. Schraubspindelpumpen liefern einen gleichmäßigen, pulsationsfreien Materialstrom, der für das weitere Mischen der Flüssigkeiten von großem Vorteil ist, da die Steuerung viel einfacher erfolgen kann, da Pulsationsspitzen nicht ausgeglichen werden müssen.

In einer Ausbildung der Erfindung können Sensoren in der Mischanlage angeordnet sein, die die Füllhöhe des Behälters über die Position der Folgeplatten messen und mit einer Regeleinheit verbunden sind, die wiederum mit der Pumpe sowie dem Drosselventil und dem Durchflusssensor verbunden ist und über welche Regeleinheit die Pumpen und das Drosselventil zur gleichmäßigen Entleerung von zumindest zwei Behältern steuerbar sind. Die gleichmäßige Entleerung von z.B. zwei Behältern ist bei Chargenbetrieb von außergewöhnlicher Bedeutung, da jeder Behälter eine eigene Chargennummer aufweist und geringe Unterschiede zwischen den Chargen auftreten können. Aus diesem Grund kann ein nicht vollständig entleerter Behälter nicht zur Mischung mit einem anderen neuen Behälter verwendet werden; der verbleibende Inhalt muss kostenpflichtig entsorgt werden. Durch diese Anordnung mit Sensor, der die Füllhöhe des Behälters über die Position der Folgeplatten misst und über eine Regeleinheit die Entleerung regelt, wird das Verbleiben von Rest-Flüssigkeit in einem Behälter vermieden; beide Behälter werden vollständig entleert. Es kann auch sein, dass produktionstechnisch die beiden verwendeten Behälter nicht gleich hoch gefüllt sind (dies kann u.a. auch durch verschiedene Viskositäten der Flüssigkeiten in den Behältern verursacht sein); in diesem Fall ist ein Ausgleich der Füllhöhen ebenfalls notwendig.

Ein anderer Aspekt der Erfindung betrifft die Bereitstellung eines Verfahrens zum Mischen von zumindest zwei Flüssigkeiten, umfassend die folgenden Schritte:
a) Pumpen einer Flüssigkeit aus einem Behälter in eine Leitung,
b) Befördern der Flüssigkeit in der Leitung zu einem Durchflusssensor und einem in Förderrichtung entweder davor oder danach angeordneten Drosselventil, die jeweils in der Leitung angebracht sind, wobei der Durchflusssensor und das Drosselventil in beliebiger Reihenfolge in enger räumlicher Nähe, wobei vorzugsweise der Abstand zwischen Drosselventil und Durchflusssensor definiert ist als Verhältnis von Länge zu Durchmesser der Leitung und max. 70:1, vorzugsweise max. 50:1, insbesondere max. 30:1, beträgt, und insbesondere unmittelbar aneinander anschließend, angeordnet sind,
c) Steuern der Durchflussmenge durch das Drosselventil,
d) Leiten der gewünschten Durchflussmenge der Flüssigkeit in eine Leitung, in die zumindest eine weitere, z.B. in einer getrennten Leitung auf beliebige Weise geförderte oder auf gleiche Weise durch Schritte a) bis c) geförderte Flüssigkeit eingeleitet wird, wodurch das Mischen erfolgt,
e) Auftragen des Gemisches auf die gewünschte Stelle bzw. Einleiten des Gemisches in eine gewünschte Vorrichtung zur Weiterverarbeitung.

Eine Vorrichtung wie vorher beschrieben kann bei diesem Verfahren verwendet werden. Dieses Verfahren ermöglicht die genaue Steuerung des Mischverhältnisses, das während des Verfahrens immer wieder neu justiert werden kann und prompt umsetzbar ist. Eine zeitliche Verzögerung des Einstellens des korrekten Mischverhältnisses erfolgt nicht. Die Formulierung "unmittelbar davor oder unmittelbar danach anschließend" bedeutet, dass kein Abstand zwischen dem Drosselventil und dem Durchflusssensor besteht. Gegebenenfalls kann aber auch ein geringer Abstand zwischen dem Drosselventil und dem Durchflusssensor bestehen, z.B. max. 100 cm, vorzugsweise max. 50 cm, 40 cm, 30 cm, 20 cm, 10 cm oder 5 cm. Die Verhältnisse geben an, wie lange die Leitung im Verhältnis zum Durchmesser maximal sein darf. Bei einem solchen Verhältnis von Länge zu Durchmesser der Leitung von 70:1 kann eine ausgezeichnete Mischung erreicht werden. Bei einer Leitungslänge von 1 m beträgt der Durchmesser maximal 14,3 mm. Bevorzugt wird ein Verhältnis von 50:1 und insbesondere 30:1, bei welchen die Mischung noch besser erfolgt. Das Verhältnis kann auch maximal 60:1, maximal 40:1, maximal 20:1 oder maximal 10:1 oder maximal 5:1, 4:1, 3:1, 2:1 oder maximal 1:1 betragen.

In einer Ausführungsform der vorliegenden Erfindung kann in Schritt d) das Mischen an der Vereinigungsstelle der zumindest zwei Leitungen zu einer Leitung erfolgen, wobei die Vereinigungsstelle in enger räumlicher Nähe zu dem Drosselventil bzw. dem Durchflusssensor angeordnet ist, wobei vorzugsweise der Abstand zwischen der Vereinigungsstelle der zumindest zwei Leitungen zu einer Leitung und dem Drosselventil bzw. dem Durchflusssensor definiert ist als Verhältnis von Länge zu Durchmesser der Leitung und max. 70:1, vorzugsweise max. 50:1, insbesondere max. 30:1, beträgt, und insbesondere unmittelbar anschließend an das Drosselventil bzw. den Durchflusssensor angeordnet ist. Dadurch wird die Totzeit-Problematik einer langen Leitung vermieden, wodurch bessere Mischergebnisse erhalten werden. Die Verhältnisse geben an, wie lange die Leitung im Verhältnis zum Durchmesser maximal sein darf. Bei einem solchen Verhältnis von Länge zu Durchmesser der Leitung von 70:1 kann eine ausgezeichnete Mischung erreicht werden. Bei einer Leitungslänge von 1 m beträgt der Durchmesser maximal 14,3 mm. Bevorzugt wird ein Verhältnis von 50:1 und insbesondere 30:1, bei welchen die Mischung noch besser erfolgt. Das Verhältnis kann auch maximal 60:1, maximal 40:1, maximal 20:1 oder maximal 10:1 oder maximal 5:1, 4:1, 3:1, 2:1 oder maximal 1:1 betragen.

In einer Ausführungsform kann in Schritt a) das Pumpen durch eine Zahnradpumpe oder eine Exzenterschneckenpumpe oder eine Schöpfkolbenpumpe oder eine Schraubspindelpumpe erfolgen. Eine Schraubspindelpumpe fördert das Material pulsationsfrei und stellt somit das ideale Mittel zum Befördern des Materials dar, da ein pulsationsfreier Materialstrom einfach zu messen und somit zu vermischen ist.

In einer anderen Ausführungsform der Erfindung kann das Drosselventil durch eine Pumpe oder eine Digitalhydraulik ersetzt sein. Dabei wirkt diese Pumpe gleich wie ein Drosselventil als Drosselstelle und kann den Systemdruck erhöhen oder auch verringern. Diese Pumpe ersetzt nicht die Förderpumpe an den Materialbehälter, die den Systemdruck erzeugt. Durch das unmittelbare Angrenzen der Pumpe an den Durchflusssensor ist es möglich, mithilfe einer Pumpe ebenfalls eine hervorragende Mischung zu erreichen, und zwar ohne Störeinflüsse wie große Leitungslängen oder Hydraulikarmaturen (Totzeitglieder). Digitalhydraulik bezeichnet ein Ventil, das nur zwei Schaltungen einnehmen kann: ein oder aus. Somit entsteht eine pulsierende Förderung, wobei sich die Digitalhydraulik mit zunehmender Frequenz der Steuerung einer kontinuierlichen Förderung angleicht, da die Schaltzeiten so kurz werden, dass die Unterschiede zwischen Fördern und Nicht-Fördern zu klein werden, um nachweisbar zu sein. Schaltzeiten von 5 Hz ergeben eine pulsationsarme Dosierung, und wird die Schaltzeit noch weiter erhöht, z.B. auf 10 Hz oder höher, z.B. 20 Hz, 30 Hz, 40 Hz, 50 Hz oder 100 Hz, wird eine im Wesentlichen pulsationsfreie Dosierung erreicht.

In einer Ausbildung der Erfindung kann der Durchflusssensor ein Mengenmesser oder ein Durchflussmesser oder ein Differenzialdruck-Durchflusssensor sein. Es sind vielfältige Durchflusssensoren auf dem Gebiet der Erfindung bekannt. Durchflusssensoren werden eingeteilt in Mengenmesser (Volumenzähler) und Durchflussmesser. Zu den Mengenmessern (Volumenzählern) zählt man unmittelbare Zähler (Verdrängungszähler), wie z.B. Ovalradzähler, Ringkolbenzähler oder Drehkolbenzähler, und mittelbare Zähler, wie z.B. Turbinenradzähler, Flügelradzähler, Woltmanzähler, Schraubenradzähler, Wirbel-Durchflussmesser oder Drall-Durchflussmesser. Zu den Durchflussmessern zählt man Volumendurchflussmesser, wie z.B. Wirkdruck-Messverfahren, Schwebekörper-Durchflussmesser, magnetische Induktions-Durchflussmesser oder Ultraschall-Durchflussmesser, und Massendurchflussmesser, wie z.B. Coriolis-Massendurchflussmesser oder thermische Massendurchflussmesser. Ein Differenzialdruck-Durchflusssensor misst den Druck vor und nach dem Drosselventil und schließt aus der Differenz der Drücke auf die Menge, die durchfließt, zurück. Die Begriffe "in enger räumlicher Nähe, "Abstand" und "Verhältnis von Länge zu Durchmesser der Leitung" beziehen sich bei einem Differenzialdruck-Durchflusssensor auf den Abstand zwischen dem Drosselventil und dem Druckmessgerät, das in Fließrichtung der Flüssigkeit vor dem Drosselventil angeordnet ist, und auf den Abstand zwischen dem Drosselventil und dem Druckmessgerät, das in Fließrichtung der Flüssigkeit nach dem Drosselventil angeordnet ist; somit sind beim Differenzialdruck-Durchflusssensor zwei Abstände zu beachten, die beide den obigen Anforderungen genügen müssen.

In einer anderen Ausführungsform der Erfindung kann die Flüssigkeit eine Viskosität im Bereich von 5.000 mPa.s bis 3.000.000 mPa.s aufweisen. D.h. das Verfahren ist für eine Flüssigkeit mit einer Viskosität im Bereich von 5.000 mPa.s bis 3.000.000 mPa.s geeignet. Solche Flüssigkeiten sind für industrielle Anwendungen besonders bevorzugt.

In einer Ausbildung der Erfindung können Sensoren, die in der Mischanlage angeordnet sind, die Füllhöhe des Behälters über die Position der Folgeplatten messen, wobei die Sensoren mit einer Regeleinheit verbunden sind, die wiederum mit der Pumpe sowie dem Drosselventil und dem Durchflusssensor verbunden ist, wobei die Regeleinheit die Pumpen und das Drosselventil zur gleichmäßigen Entleerung von zumindest zwei Behältern steuert. Die gleichmäßige Entleerung von z.B. zwei Behältern ist bei Chargenbetrieb von außergewöhnlicher Bedeutung, da jeder Behälter eine eigene Chargennummer aufweist und geringe Unterschiede zwischen den Chargen auftreten können. Aus diesem Grund kann ein nicht vollständig entleerter Behälter nicht zur Mischung mit einem anderen neuen Behälter verwendet werden; der verbleibende Inhalt muss kostenpflichtig entsorgt werden. Durch diese Anordnung mit Sensor, der die Füllhöhe des Behälters über die Position der Folgeplatten misst und über eine Regeleinheit die Entleerung regelt, wird das Verbleiben von Rest-Flüssigkeit in einem Behälter vermieden; beide Behälter werden vollständig entleert. Es kann auch sein, dass produktionstechnisch die beiden verwendeten Behälter nicht gleich hoch gefüllt sind (dies kann u.a. auch durch verschiedene Viskositäten der Flüssigkeiten in den Behältern verursacht sein); in diesem Fall ist ein Ausgleich der Füllhöhen ebenfalls notwendig.

### Zeichnungen

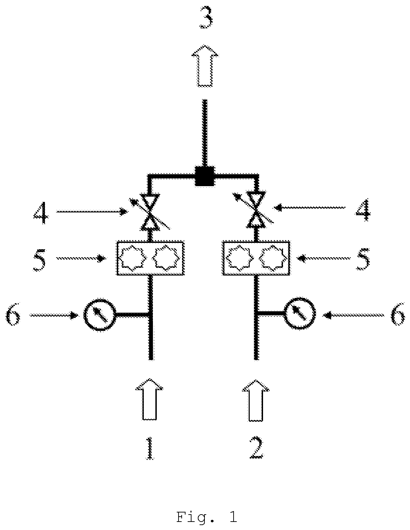

Fig. 1 zeigt eine Mischanlage gemäß der vorliegenden Erfindung. Die Pfeile zeigen die Flussrichtung der Komponenten.

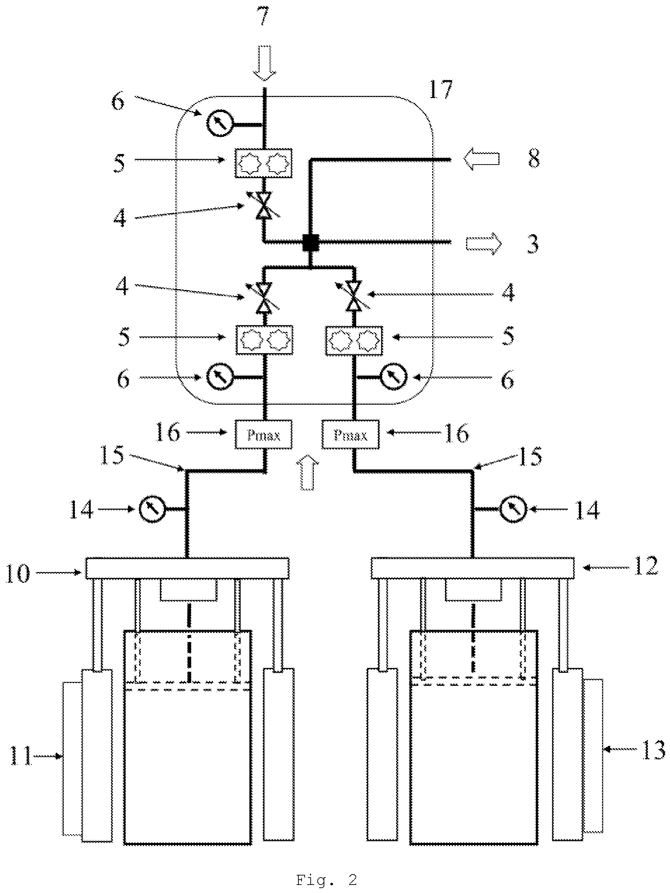

Fig. 2 zeigt eine andere Ausführungsform der vorliegenden Erfindung, die zusätzlich zur Mischanlage Fördereinrichtungen zum Entleeren von Behältern zeigt und eine Additivbeimengung aufweist. Die Pfeile zeigen die Flussrichtung der Komponenten.

Die Bezugszeichen bedeuten:
1: Rohrleitung/Schlauch von Förderpumpe (Komponente A)
2: Rohrleitung/Schlauch von Förderpumpe (Komponente B)
3: Rohrleitung/Schlauch zum Produktionsprozess: Medium A und B gemischt
4: Drosselventil
5: Durchflussmesseinrichtung
6: Druckaufnehmer / Manometer
7: Zuführung Additiv; Druckleitung aus Vorförderpumpe oder Druckbehälter
8: Rohrleitung/Schlauch zur Zuführung von Additiv 2 (diskontinuierlich oder kontinuierlich) (optional)
9: Rohrleitung/Schlauch Additiv 1
10: Förderanlage Komponente A
11: Füllstandsensor Gebinde Komponente A
12: Förderanlage Komponente B
13: Füllstandsensor Gebinde Komponente B
14: Druckaufnehmer / Manometer Förderdruck Förderanlage
15: Schlauchleitung
16: Druckreduzierventil (optional)
17: Constant-Flow-Mix-Einheit

### BEISPIELE

### Beispiel 1: Mischen von zumindest zwei Flüssigkeiten

Das Material wird über Förderpumpen, beispielsweise eine Zahnradpumpe oder eine Exzenterschneckenpumpe oder eine Schöpfkolbenpumpe oder eine Schraubspindelpumpe oder eine beliebige andere Pumpe, aus dem Materialbehälter gepumpt. Über eine Schlauchleitung 1 wird dieses zur Verarbeitungseinheit gefördert. Optional können Druckregelventile den Materialdruck mechanisch regeln und auf einem konstanten Wert halten. Es besteht auch die Möglichkeit, über Druckaufnehmer die Förderpumpen so zu regeln, dass ein konstanter Druck an der Verarbeitungseinheit ansteht. Leichte Druckschwankungen können über die volumetrische Messung ausgeregelt werden. Über ein Drosselventil 4 wird der benötigte Materialfluss je Komponente eingestellt. Vor oder nach dem Ventil 4 wird der Durchfluss gemessen, z.B. durch einen Durchflusssensor 5. Das in der anderen Leitung 2 nach einem beliebigen oder demselben Prinzip geförderte Material wird dann in eine gemeinsame Leitung 3 eingebracht, und das Gemisch wird dem Verarbeitungsprozess zugeführt. Es können noch weitere Leitungen in die Leitung 3 einmünden, in denen sich Material für den Verarbeitungsprozess befindet, das auf eine beliebige oder gleiche Weise gefördert wurde wie zuvor beschrieben.

Das Drosselventil 4 und der Durchflusssensor 5 können in beliebiger Reihenfolge in enger räumlicher Nähe angeordnet sein. Der Abstand zwischen Drosselventil 4 und Durchflusssensor 5 kann definiert sein als Verhältnis von Länge zu Durchmesser der Leitung 1, 2 und max. 70:1, vorzugsweise max. 50:1, insbesondere max. 30:1, betragen. Der Durchflussmesser 5 und das Drosselventil 4 können in beliebiger Reihenfolge unmittelbar aneinander anschließend angeordnet sein.

So kann der Abstand zwischen dem Drosselventil 4 und dem Durchflusssensor 5 max. 100 cm, vorzugsweise max. 50 cm, 40 cm, 30 cm, 20 cm, 10 cm oder 5 cm betragen.

Der Abstand zwischen dem Drosselventil 4 und dem Durchflusssensor 5 kann auch durch ein Verhältnis zwischen Länge und dem Durchmesser der Leitung 1, 2 angegeben werden. Das Verhältnis Länge zu Durchmesser der Leitung 1, 2 beträgt max. 70:1, vorzugsweise max. 50:1, insbesondere max. 30:1, also z.B. auch 60:1, 40:1, 20:1, 10:1 oder maximal 5:1, 4:1, 3:1, 2:1 oder maximal 1:1. Folgende Tabelle 1 gibt eine Übersicht über erfindungsgemäße Verhältnisse.

**Tabelle 1: Verhältnis zwischen Leitungslänge und Durchmesser gemäß der Erfindung**

| Länge [mm] | Durchmesser [mm] | Verhältnis Länge:Durchmesser | Länge [mm] | Durchmesser [mm] | Verhältnis Länge:Durchmesser |
|---|---|---|---|---|---|
| 1000 | 14,3 | 70 | 300 | 4,3 | 70 |
| 1000 | 16,7 | 60 | 300 | 5,0 | 60 |
| 1000 | 20,0 | 50 | 300 | 6,0 | 50 |
| 1000 | 25,0 | 40 | 300 | 7,5 | 40 |
| 1000 | 33,3 | 30 | 300 | 10,0 | 30 |
| 1000 | 50,0 | 20 | 300 | 15,0 | 20 |
| 1000 | 100,0 | 10 | 300 | 30,0 | 10 |
| 1000 | 200,0 | 5 | 300 | 60,0 | 5 |
| 1000 | 250,0 | 4 | 300 | 75,0 | 4 |
| 1000 | 333,3 | 3 | 300 | 100,0 | 3 |
| 1000 | 500,0 | 2 | 300 | 150,0 | 2 |
| 1000 | 1000,0 | 1 | 300 | 300,0 | 1 |
| 900 | 12,9 | 70 | 200 | 2,9 | 70 |
| 900 | 15,0 | 60 | 200 | 3,3 | 60 |
| 900 | 18,0 | 50 | 200 | 4,0 | 50 |
| 900 | 22,5 | 40 | 200 | 5,0 | 40 |
| 900 | 30,0 | 30 | 200 | 6,7 | 30 |
| 900 | 45,0 | 20 | 200 | 10,0 | 20 |
| 900 | 90,0 | 10 | 200 | 20,0 | 10 |
| 900 | 180,0 | 5 | 200 | 40,0 | 5 |
| 900 | 225,0 | 4 | 200 | 50,0 | 4 |
| 900 | 300,0 | 3 | 200 | 66,7 | 3 |
| 900 | 450,0 | 2 | 200 | 100,0 | 2 |
| 900 | 900,0 | 1 | 200 | 200,0 | 1 |
| 800 | 11,4 | 70 | 100 | 1,4 | 70 |
| 800 | 13,3 | 60 | 100 | 1,7 | 60 |
| 800 | 16,0 | 50 | 100 | 2,0 | 50 |
| 800 | 20,0 | 40 | 100 | 2,5 | 40 |
| 800 | 26,7 | 30 | 100 | 3,3 | 30 |
| 800 | 40,0 | 20 | 100 | 5,0 | 20 |
| 800 | 80,0 | 10 | 100 | 10,0 | 10 |
| 800 | 160,0 | 5 | 100 | 20,0 | 5 |
| 800 | 200,0 | 4 | 100 | 25,0 | 4 |
| 800 | 266,7 | 3 | 100 | 33,3 | 3 |
| 800 | 400,0 | 2 | 100 | 50,0 | 2 |
| 800 | 800,0 | 1 | 100 | 100,0 | 1 |
| 700 | 10,0 | 70 | 50 | 0,7 | 70 |
| 700 | 11,7 | 60 | 50 | 0,8 | 60 |
| 700 | 14,0 | 50 | 50 | 1,0 | 50 |
| 700 | 17,5 | 40 | 50 | 1,3 | 40 |
| 700 | 23,3 | 30 | 50 | 1,7 | 30 |
| 700 | 35,0 | 20 | 50 | 2,5 | 20 |
| 700 | 70,0 | 10 | 50 | 5,0 | 10 |
| 700 | 140,0 | 5 | 50 | 10,0 | 5 |
| 700 | 175,0 | 4 | 50 | 12,5 | 4 |
| 700 | 233,3 | 3 | 50 | 16,7 | 3 |
| 700 | 350,0 | 2 | 50 | 25,0 | 2 |
| 700 | 700,0 | 1 | 50 | 50,0 | 1 |
| 600 | 8,6 | 70 | 30 | 0,4 | 70 |
| 600 | 10,0 | 60 | 30 | 0,5 | 60 |
| 600 | 12,0 | 50 | 30 | 0,6 | 50 |
| 600 | 15,0 | 40 | 30 | 0,8 | 40 |
| 600 | 20,0 | 30 | 30 | 1,0 | 30 |
| 600 | 30,0 | 20 | 30 | 1,5 | 20 |
| 600 | 60,0 | 10 | 30 | 3,0 | 10 |
| 600 | 120,0 | 5 | 30 | 6,0 | 5 |
| 600 | 150,0 | 4 | 30 | 7,5 | 4 |
| 600 | 200,0 | 3 | 30 | 10,0 | 3 |
| 600 | 300,0 | 2 | 30 | 15,0 | 2 |
| 600 | 600,0 | 1 | 30 | 30,0 | 1 |
| 500 | 7,1 | 70 | 20 | 0,3 | 70 |
| 500 | 8,3 | 60 | 20 | 0,3 | 60 |
| 500 | 10,0 | 50 | 20 | 0,4 | 50 |
| 500 | 12,5 | 40 | 20 | 0,5 | 40 |
| 500 | 16,7 | 30 | 20 | 0,7 | 30 |
| 500 | 25,0 | 20 | 20 | 1,0 | 20 |
| 500 | 50,0 | 10 | 20 | 2,0 | 10 |
| 500 | 100,0 | 5 | 20 | 4,0 | 5 |
| 500 | 125,0 | 4 | 20 | 5,0 | 4 |
| 500 | 166,7 | 3 | 20 | 6,7 | 3 |
| 500 | 250,0 | 2 | 20 | 10,0 | 2 |
| 500 | 500,0 | 1 | 20 | 20,0 | 1 |
| 400 | 5,7 | 70 | 10 | 0,1 | 70 |
| 400 | 6,7 | 60 | 10 | 0,2 | 60 |
| 400 | 8,0 | 50 | 10 | 0,2 | 50 |
| 400 | 10,0 | 40 | 10 | 0,3 | 40 |
| 400 | 13,3 | 30 | 10 | 0,3 | 30 |
| 400 | 20,0 | 20 | 10 | 0,5 | 20 |
| 400 | 40,0 | 10 | 10 | 1,0 | 10 |
| 400 | 80,0 | 5 | 10 | 2,0 | 5 |
| 400 | 100,0 | 4 | 10 | 2,5 | 4 |
| 400 | 133,3 | 3 | 10 | 3,3 | 3 |
| 400 | 200,0 | 2 | 10 | 5,0 | 2 |
| 400 | 400,0 | 1 | 10 | 10,0 | 1 |

Ebenso kann der Abstand zwischen der Vereinigungsstelle der zumindest zwei Leitungen 1, 2 zu einer Leitung 3 und dem Drosselventil 4 bzw. dem Durchflusssensor 5 den oben genannten Verhältnissen und Längenmaßen entsprechen.

Es können flüssige bis pastöse Medien, welche von Vorförderanlagen dieser extern zugeführt werden (z.B. Fassheber mit Behälter "20-l-Pail-Kit"- oder "200-l-Drum-Kit"-Gebinde), vermengt werden, z.B. Flüssigkeiten mit einer Viskosität im Bereich von 5.000 mPa.s bis 3.000.000 mPa.s, 100.000 mPa.s bis 3.000.000 mPa.s, 500.000 mPa.s bis 3.000.000 mPa.s oder 1.000.000 mPa.s bis 3.000.000 mPa.s. Es werden mindestens zwei Komponenten, mitunter auch nur eine Komponente und ein Additiv, in einem variablen Mischungsverhältnis vermischt, wobei zusätzliche Komponenten, z.B. Additive und Farben, in geringerer Form zusätzlich beigemengt werden können (geringere Viskosität). Dies geschieht kontinuierlich und wird permanent überwacht. Das Mischungsverhältnis ist über den ganzen Zyklus konstant und hat nahezu keine Abweichung.

Der Durchfluss jeder Komponente wird mit einem Drosselventil 4 direkt an der Verarbeitungseinheit verändert. Dieser kann von 0-100% stufenlos eingestellt werden. Eine Messeinrichtung, z.B. ein Durchflusssensor 5, welche wahlweise direkt vor oder nach dem Ventil sitzt, nimmt den aktuellen Durchflusswert auf. Der Zuführdruck zu den einzelnen Ventilen wird immer konstant gehalten. Es besteht eine geschlossene Regelschleife, in der alle Störfaktoren berücksichtigt sind. Das zu regelnde hydraulische System hat aufgrund der Anordnung von Sensor und Aktor sehr kurze Wege und resultierend geringere Störeinflüsse und kann mit einfachen Methoden sehr exakt geregelt werden.

Der Durchflusssensor 5 kann ein Mengenmesser oder ein Durchflussmesser oder ein Differenzialdruck-Durchflusssensor sein. Durchflusssensoren werden eingeteilt in Mengenmesser (Volumenzähler) und Durchflussmesser. Zu den Mengenmessern (Volumenzählern) zählt man unmittelbare Zähler (Verdrängungszähler), wie z.B. Ovalradzähler, Ringkolbenzähler oder Drehkolbenzähler, und mittelbare Zähler, wie z.B. Turbinenradzähler, Flügelradzähler, Woltmanzähler, Schraubenradzähler, Wirbel-Durchflussmesser oder Drall-Durchflussmesser. Zu den Durchflussmessern zählt man Volumendurchflussmesser, wie z.B. Wirkdruck-Messverfahren, Schwebekörper-Durchflussmesser, magnetische Induktions-Durchflussmesser oder Ultraschall-Durchflussmesser, und Massendurchflussmesser, wie z.B. Coriolis-Massendurchflussmesser oder thermische Massendurchflussmesser. Ein Differenzialdruck-Durchflusssensor misst den Druck vor und nach dem Drosselventil und schließt aus der Differenz der Drücke auf die Menge, die durchfließt, zurück. Die Begriffe "in enger räumlicher Nähe, "Abstand" und "Verhältnis von Länge zu Durchmesser der Leitung" beziehen sich bei einem Differenzialdruck-Durchflusssensor auf den Abstand zwischen dem Drosselventil und dem Druckmessgerät, das in Fließrichtung der Flüssigkeit vor dem Drosselventil angeordnet ist, und auf den Abstand zwischen dem Drosselventil und dem Druckmessgerät, das in Fließrichtung der Flüssigkeit nach dem Drosselventil angeordnet ist; somit sind beim Differenzialdruck-Durchflusssensor zwei Abstände zu beachten, die beide den obigen Anforderungen genügen müssen.

Die Mischanlage kann mit jeweils einem Rückschlagventil ausgerüstet sein, um das Rückfließen von einer Komponente in die Zuführung der anderen Komponente zu verhindern. Im Allgemeinen übernimmt allerdings das Drosselventil diese Funktion, da durch die Durchflusssensoren das Rückfließen erkannt wird und gegengesteuert wird.

Das Drosselventil 4 kann jedoch auch durch eine Pumpe ersetzt sein. Dabei wirkt diese Pumpe gleich wie ein Drosselventil 4 als Drosselstelle und kann den Systemdruck erhöhen oder auch verringern. Diese Pumpe ersetzt nicht die Förderpumpe an den Materialbehälter, die den Systemdruck erzeugt. In solch einer räumlichen Nähe der Pumpe zum Durchflusssensor 5 oder durch das unmittelbare Angrenzen der Pumpe an den Durchflusssensor 5 ist es möglich, mithilfe einer Pumpe ebenfalls eine hervorragende Mischung zu erreichen, und zwar ohne Störeinflüsse wie große Leitungslängen oder Hydraulikarmaturen (Totzeitglieder).

Ebenso kann das Drosselventil 4 durch eine Digitalhydraulik ersetzt sein. Digitalhydraulik bezeichnet ein Ventil, das nur zwei Schaltungen einnehmen kann: ein oder aus. Somit entsteht eine pulsierende Förderung, wobei sich die Digitalhydraulik mit zunehmender Frequenz der Steuerung einer kontinuierlichen Förderung angleicht, da die Schaltzeiten so kurz werden, dass die Unterschiede zwischen Fördern und Nicht-Fördern zu klein werden, um nachweisbar zu sein. Schaltzeiten von 5 Hz ergeben eine pulsationsarme Dosierung, und wird die Schaltzeit noch weiter erhöht, z.B. auf 10 Hz oder höher, z.B. 20 Hz, 30 Hz, 40 Hz, 50 Hz oder 100 Hz, wird eine im Wesentlichen pulsationsfreie Dosierung erreicht.

### Beispiel 2: Spritzguss

Die gebräuchlichste Form der LSR-Verarbeitung (LSR steht für "liquid silicon rubber", also flüssigen Silikonkautschuk) ist die Anwendung im klassischen Spritzgießverfahren im Verbund mit einer Spritzgießmaschine. Hierbei wird das Material im Mischungsverhältnis 1:1 in der in Beispiel 1 beschriebenen Vorrichtung vermischt und in die Förderschnecke der Spritzgießmaschine dosiert. Diese spritzt das Material in die heiße Form ein.

### Beispiel 3: Direkt-Verguss

Weitere Anwendungsgebiete dieser Mischanlagen liegen im direkten Verguss, in dem Bauteile ohne Zuhilfenahme einer Spritzgießmaschine das Material direkt in ein Werkzeug fördern. Weitere Materialien können natürlich auch gemischt werden, wie z.B. Harze und Klebstoffe, Lebensmittel.

Für großvolumige Teile, welche im Vergussverfahren hergestellt werden, sind oft sehr hohe Materialmengen notwendig. Die Einspritzung erfolgt direkt von der Förderpumpe über die Constant-Flow-Mix-Anlage an das Werkzeug. Auf der Bedienoberfläche kann das Spritzprofil (Menge, Zeit) eingestellt werden. Optional kann der Einsatz von Forminnendruck-Sensoren das Einspritzen regeln.

### Beispiel 4: Additivbeigabe (Farbe)

Der Volumenstrom wird bei den Hauptkomponenten aus dem aktuellen Durchflusswert und der Stellgröße des Drosselventils 4 geregelt. Das Additiv wird konstant dem Hauptvolumenstrom beigemengt und dabei mitprotokolliert.
Möglichkeit 1: Die Additivbeigabe wird mittels Drosselventil und Messeinrichtung geregelt.
Möglichkeit 2: Die Additivbeigabe erfolgt kontinuierlich zum Volumenstrom mit einer Einspritzeinheit.
Möglichkeit 3: Die Additivbeigabe erfolgt diskontinuierlich zum Volumenstrom mittels getaktetem Farbventil (es wird bei jedem Takt eine Menge X in den Hauptstrom injiziert).
Möglichkeit 4: Die Additivbeigabe wird anstelle eines Drosselventils mit einer Pumpe und Messeinrichtung geregelt.

### Beispiel 5: Funktionsprinzip Ausgleich Fassfüllhöhe

Aufgrund der Möglichkeit, dass sich die zu mischenden Materialien in der Viskosität unterscheiden können, ist es möglich, dass dies bei Anlagen mit einem volumetrischen Fördervolumen und einer Mischung von 1:1 zu einer ungleichen Entleerung der Materialbehälter führen kann. Oft ist auch in der Praxis die vom Hersteller gelieferte Gebinde nicht gleich hoch gefüllt (Komponente A und B sind vom Volumen her unterschiedlich). Da die Gebinde A und B gleichzeitig entleert werden müssen (Chargenherstellprozess) und diese nicht wahlweise getauscht werden können, kommt es bei einem fixen Mischungsverhältnis zu einer ungleichen Entleerung und einem Restmaterialgehalt in einem Behälter, wobei sich der zweite Behälter schon komplett entleert hat. Somit kann es vorkommen, dass sich 10 % Restmaterial in einem Behälter befinden, welche nicht mehr weiter verarbeitet werden können und somit als Sondermüll entsorgt werden müssen. Dies bedeutet eine erhöhte Umweltbelastung und für den Anwender zusätzlich eine finanzielle Belastung.

Herstellerabhängig können die Silikone mit einer geringen Abweichung von +-5% (abhängig vom Hersteller-Datenblatt des Silikons) vermengt werden. Dies erlaubt eine Angleichung des Mischungsverhältnisses, damit die Behälter gleichzeitig entleert werden können (falls die Füllhöhe +5 % der maximalen Abweichung nicht überschreitet).

Die Materialbehälter werden gleichzeitig eingewechselt, und nach dem Entlüftungsvorgang wird mit einem Sensor 11, 13, der in der Mischanlage angeordnet ist, die Füllhöhe des Behälters über die Position der Folgeplatten ermittelt. Aus der Abweichung wird das nötige Mischungsverhältnis errechnet; eine Regeleinheit, die mit der Pumpe sowie dem Drosselventil 4 und dem Durchflusssensor 5 verbunden ist, regelt dann die Pumpen und das Drosselventil 4 in dem Ausmaß, dass beide Behälter gleichmäßig und vollständig geleert werden. Der Durchflusssensor 5 liefert Informationen über den Materialfluss. Das nötige Mischungsverhältnis wird während der Produktion erneut neu berechnet, um etwaige Viskositätsunterschiede im Gebinde zu kompensieren.

### Beispiel 6: Funktionsprinzip Tandemanwendung

Es besteht die Möglichkeit, von einer Materialfördereinheit (Förderpumpen) mehrere Maschinen zu bedienen. Jeder Verbraucher ist mit einer Constant-Flow-Mix-Einheit ausgestattet, welche über eine Datenleitung mit einer übergeordneten Steuerung kommuniziert. Diese verwaltet mehrere Constant-Flow-Mix-Einheiten und regelt die Materialförderpumpen und zugleich den Füllstand der Fässer. Die einzelnen Constant-Flow-Mix-Einheiten korrigieren das Mischungsverhältnis in der maximal eingestellten Toleranz (jede Constant-Flow-Mix-Einheit separat), damit die Fässer am Ende den gleichen Entleerungszustand haben und kein Restmaterial von einer Komponente überbleibt. Zusätzlich dazu können mehrere Förderpumpen zu einem Verband gekoppelt werden, damit das System permanent mit Material versorgt wird und der Produktionsprozess nicht durch einen Fasswechsel unterbrochen wird. Aufgrund der separat geregelten Mischungsverhältnisse jeder Constant-Flow-Einheit können mehrere Verbraucher von einer Materialfördereinheit gleichzeitig (simultan) mit Material versorgt werden, was bei bisherigen Systemen nicht möglich war. Zusätzlich dazu können Kompensatoren in die Zuführleitungen integriert werden, welche den Systemdruck bei paralleler Abnahme stabilisieren und konstant halten.

### Beispiel 7: Automatische Verifizierung

Um den Qualitätsstandard einer Produktion zu gewährleisten, müssen die Anlagen, Spritzgießmaschinen und Werkzeuge verifiziert werden. Dieser Vorgang beschränkt sich bei den Dosieranlagen meist auf das Einhalten des Mischungsverhältnisses. In der Regel wird der Folgeplattenstand aufgezeichnet und nach einer bestimmten Dauer der Produktion die Veränderung dokumentiert. Ob sich in der Zwischenzeit das Mischungsverhältnis außerhalb der Spezifikation befunden hat, kann nicht nachvollzogen werden.

Die Anlage kann sich selbst verifizieren nach internationalen Standards, welche beispielsweise bei Qualitätssicherungssystemen wie ISO 9001:2010 festgelegt werden. Die Auswertung kann direkt auf ein Speichermedium oder per Datentransfer übertragbar sein. Die Dokumentation erfolgt beispielsweise über die Aufzeichnung aller Prozessparameter in einem üblichen Dateiformat; Darstellung der Daten am HMI als Chart; Prozessdatenaufzeichnung für eine gegebene Anzahl an Stunden, Wochen oder per Logfile, in dem Veränderungen mit aufgezeichnet werden.

## Patentansprüche

1. Mischanlage zum Mischen von zumindest zwei Flüssigkeiten, umfassend zumindest zwei Leitungen (1, 2), die sich in einer Vereinigungsstelle zu einer Leitung (3) vereinigen, **dadurch gekennzeichnet, dass**
zumindest eine der Leitungen (1, 2) ein Drosselventil (4) und einen Durchflusssensor (5) aufweist und das Drosselventil (4) und der Durchflusssensor (5) in beliebiger Reihenfolge in enger räumlicher Nähe angeordnet sind, wobei der Abstand zwischen Drosselventil (4) und Durchflusssensor (5) definiert ist als Verhältnis von Länge zu Durchmesser der Leitung (1, 2) und max. 70:1, vorzugsweise max. 50:1, insbesondere max. 30:1, beträgt.

2. Mischanlage nach Anspruch 1., **dadurch gekennzeichnet, dass** jede Leitung (1, 2) ein Drosselventil (4) und einen Durchflusssensor (5) aufweist und das Drosselventil (4) und der Durchflusssensor (5) in beliebiger Reihenfolge in enger räumlicher Nähe angeordnet sind, wobei der Abstand zwischen Drosselventil (4) und Durchflusssensor (5) definiert ist als Verhältnis von Länge zu Durchmesser der Leitung (1, 2) und max. 70:1, vorzugsweise max. 50:1, insbesondere max. 30:1, beträgt.

3. Mischanlage nach einem der Ansprüche 1 bis 2, **dadurch gekennzeichnet, dass**
der Durchflussmesser (5) und das Drosselventil (4) in beliebiger Reihenfolge unmittelbar aneinander anschließend angeordnet sind.

4. Mischanlage nach einem der vorangegangenen Ansprüche,
**dadurch gekennzeichnet, dass**
die Vereinigungsstelle der zumindest zwei Leitungen (1, 2) zu einer Leitung (3) in enger räumlicher Nähe zu dem Drosselventil (4) bzw. dem Durchflusssensor (5) angeordnet ist, wobei der Abstand zwischen der Vereinigungsstelle der zumindest zwei Leitungen (1, 2) zu einer Leitung (3) und dem Drosselventil (4) bzw. dem Durchflusssensor (5) definiert ist als Verhältnis von Länge zu Durchmesser der Leitung (1, 2) und max. 70:1, vorzugsweise max. 50:1, insbesondere max. 30:1, beträgt.

5. Mischanlage nach einem der vorangegangenen Ansprüche,
**dadurch gekennzeichnet, dass**
die Vereinigungsstelle der zumindest zwei Leitungen (1, 2) zu einer Leitung (3) unmittelbar anschließend an das Drosselventil (4) bzw. den Durchflusssensor (5) angeordnet ist

6. Mischanlage nach einem der vorangegangenen Ansprüche,
**dadurch gekennzeichnet, dass**
der Durchflusssensor (5) ein Mengenmesser oder ein Durchflussmesser oder ein Differenzialdruck-Durchflusssensor ist.

7. Mischanlage nach einem der vorangegangenen Ansprüche,
**dadurch gekennzeichnet, dass**
zumindest eine weitere Leitung vorgesehen ist, die in die Leitung (1, 2) oder die Leitung (3) mündet.

8. Mischanlage nach Anspruch 7, **dadurch gekennzeichnet, dass** die zumindest eine weitere Leitung, die in die Leitung (1, 2) oder die Leitung (3) mündet, einen Durchflusssensor (5) und ein Drosselventil (4) aufweist, die in beliebiger Reihenfolge in enger räumlicher Nähe, wobei der Abstand zwischen Drosselventil (4) und Durchflusssensor (5) definiert ist als Verhältnis von Länge zu Durchmesser der Leitung (1, 2) und max. 70:1, vorzugsweise max. 50:1, insbesondere max. 30:1, beträgt, vorzugsweise unmittelbar aneinander anschließend, angeordnet sind.

9. Mischanlage nach Anspruch 8, dadurch gekenntzeichnet, dass der Durchflusssensor (5) und das Drosselventil (4) in der zumindest einen weiteren Leitung in enger räumlicher Nähe zur Leitung (1, 2) oder zur Leitung (3), wobei der Abstand zwischen Drosselventil (4) und Durchflusssensor (5) oder der Pumpe zur Leitung (1, 2) oder zur Leitung (3) definiert ist als Verhältnis von Länge zu Durchmesser der Leitung (1, 2) oder der Leitung (3) und max. 70:1, vorzugsweise max. 50:1, insbesondere max. 30:1, beträgt, vorzugsweise unmittelbar aneinander anschließend, angeordnet sind.

10. Mischanlage nach einem der vorangegangenen Ansprüche,
**dadurch gekennzeichnet, dass**
das Drosselventil (4) durch eine Pumpe oder eine Digitalhydraulik ersetzt ist.

11. Mischanlage nach einem der vorangegangenen Ansprüche,
**dadurch gekennzeichnet, dass**
sie zusätzlich Folgendes umfasst:
zumindest zwei Behälter, in denen sich jeweils eine Flüssigkeit befindet,
zumindest zwei Pumpen zum Befördern der Flüssigkeiten,
eine Folgeplatte für einen Behälter, die auf der Flüssigkeitsoberfläche aufliegt und dichtend mit dem Behälter abschließt,
wobei die Leitungen (1, 2) an die Pumpen in Förderrichtung anschließen.

12. Verfahren zum Mischen von zumindest zwei Flüssigkeiten, umfassend die folgenden Schritte:
a) Pumpen einer Flüssigkeit aus einem Behälter in eine Leitung (1),
b) Befördern der Flüssigkeit in der Leitung (1) zu einem Durchflusssensor (5) und einem in Förderrichtung entweder davor oder danach angeordneten Drosselventil (4), die jeweils in der Leitung (1) angebracht sind, wobei der Durchflusssensor (5) und das Drosselventil (4) in beliebiger Reihenfolge in enger räumlicher Nähe, wobei der Abstand zwischen Drosselventil (4) und Durchflusssensor (5) definiert ist als Verhältnis von Länge zu Durchmesser der Leitung (1, 2) und max. 70:1, vorzugsweise max. 50:1, insbesondere max. 30:1, beträgt, vorzugsweise unmittelbar aneinander anschließend, angeordnet sind,
c) Steuern der Durchflussmenge durch das Drosselventil (4),
d) Leiten der gewünschten Durchflussmenge der Flüssigkeit in eine Leitung (3), in die zumindest eine weitere, z.B. in einer getrennten Leitung (2) auf beliebige Weise geförderte oder auf gleiche Weise wie in den Schritten a) bis c) geförderte Flüssigkeit eingeleitet wird, wodurch das Mischen erfolgt,
e) Auftragen des Gemisches auf die gewünschte Stelle bzw. Einleiten des Gemisches in eine gewünschte Vorrichtung zur Weiterverarbeitung.

13. Verfahren nach Anspruch 12, **dadurch gekennzeichnet, dass** in Schritt d) das Mischen an der Vereinigungsstelle der zumindest zwei Leitungen (1, 2) zu einer Leitung (3) erfolgt, wobei die Vereinigungsstelle in enger räumlicher Nähe zu dem Drosselventil (4) bzw. dem Durchflusssensor (5) angeordnet ist, wobei der Abstand zwischen der Vereinigungsstelle der zumindest zwei Leitungen (1, 2) zu einer Leitung (3) und dem Drosselventil (4) bzw. dem Durchflusssensor (5) definiert ist als Verhältnis von Länge zu Durchmesser der Leitung (1, 2) und max. 70:1, vorzugsweise max. 50:1., insbesondere max. 30:1, beträgt, vorzugsweise unmittelbar anschließend an das Drosselventil (4) bzw. den Durchflusssensor (5) angeordnet ist.

14. Verfahren nach einem der Ansprüche 12 bis 13, **dadurch gekennzeichnet, dass**
das Drosselventil (4) durch eine Pumpe oder eine Digitalhydraulik ersetzt ist.

## Claims

1. A mixing device for mixing at least two liquids, comprising at least two conduits (1, 2) which are joined at a joining point to become a single conduit (3), **characterized in that** at least one of said conduits (1, 2) has a flow control valve (4) and a flow sensor (5) and **in that** said flow control valve (4) and said flow sensor (5) are arranged in any order and in close proximity to each other, the distance between said flow control valve (4) and said flow sensor (5) being defined as the ratio of the length to the diameter of the conduit (1, 2) and amounting to maximally 70:1, preferably to maximally 50:1, and particularly preferably to maximally 30:1.

2. The mixing device according to claim 1, **characterized in that**
each conduit (1, 2) has a flow control valve (4) and a flow sensor (5) and **in that** said flow control valve (4) and said flow sensor (5) are arranged in any order and in close proximity to each other, the distance between said flow control valve (4) and said flow sensor (5) being defined as the ratio of the length to the diameter of the conduit (1, 2) and amounting to maximally 70:1, preferably to maximally 50:1, and particularly preferably to maximally 30:1.

3. The mixing device according to claim 1 or 2, **characterized in that**
the flow sensor (5) and the flow control valve (4) are arranged in any order directly adjacent to each other.

4. The mixing device according to any one of the preceding claims, **characterized in that**
said joining point where said at least two conduits (1, 2) are joined into a single conduit (3) is situated in close proximity to the flow control valve (4) or the flow sensor (5), the distance between said joining point where said at least two conduits (1, 2) are joined into a single conduit (3) and said flow control valve (4) and said flow sensor (5) being defined as the ratio of the length to the diameter of the conduit (1, 2) and amounting to maximally 70:1, preferably to maximally 50:1, and particularly preferably to maximally 30:1.

5. The mixing device according to any one of the preceding claims **characterized in that**
the joining point where the at least two conduits (1, 2) are joined into a single conduit (3) is located directly adjacent to the flow control valve (4) or the flow sensor (5).

6. The mixing device according to any one of the preceding claims, **characterized in that**
the flow sensor (5) is a volumeter or a flow meter or a differential pressure flow sensor.

7. The mixing device according to any one of the preceding claims, **characterized in that**
at least one additional conduit terminating in the conduit (1, 2) or the conduit (3) is provided.

8. The mixing device according to claim 7, **characterized in that**
said at least one additional conduit terminating in the conduit (1, 2) or the conduit (3) has a flow sensor (5) and a flow control valve (4), which are arranged in any order in close proximity, the distance between said flow control valve (4) and said flow sensor (5) being defined as the ratio of the length to the diameter of the conduit (1, 2) and amounting to maximally 70:1, preferably to maximally 50:1, and particularly preferably to maximally 30:1, preferably directly adjacent to each other.

9. The mixing device according to claim 8, **characterized in that**
said flow sensor (5) and said flow control valve (4) of said at least one additional conduit are arranged in close proximity to the conduit (1, 2) or the conduit (3), the distance between said flow control valve (4) and said flow sensor (5) or between the pump and the conduit (1, 2) or the conduit (3) being defined as the ratio of the length to the diameter of the conduit (1, 2) or the conduit (3) and amounting to maximally 70:1, preferably to maximally 50:1, particularly to maximally 30:1, preferably directly adjacent to each other.

10. The mixing device according to any one of the preceding claims, **characterized in that**
the flow control valve (4) is replaced by a pump or digital hydraulic equipment.

11. The mixing device according to any one of the preceding claims, **characterized in that**
it additionally comprises:
at least two containers, each holding a liquid,
at least two pumps for delivering the liquids,
a follower plate for a container, said follower plate being placed on the liquid's surface and sealing the respective container,
the conduits (1, 2) being connected downstream of the pumps in the feeding direction.

12. A process for mixing at least two liquids, comprising the following steps:
a) pumping a liquid from a container into a conduit (1),
b) feeding said liquid via said conduit (1) to a flow sensor (5) and a flow control valve (4) which is arranged either up- or downstream of said flow sensor in the feeding direction, said flow sensor (5) and said flow control valve (4) being mounted within the conduit (1) and being arranged in any order in close proximity and preferably directly adjacent to each other, the distance between said flow control valve (4) and said flow sensor (5) being defined as the ratio of the length to the diameter of the conduit (1, 2) and amounting to maximally 70:1, preferably to maximally 50:1, and particularly preferably to maximally 30:1.,
c) controlling the flow rate by means of said flow control valve (4),
d) introducing the desired flow rate of the liquid into a conduit (3) into which another liquid which is, for example, delivered via a separate conduit (2) in any way or in the same way as in the steps a) to c) is introduced, whereby the mixing of said liquids is achieved,
e) applying the mixture at the desired location or introducing the mixture into a desired device for further processing.

13. The process according to claim 12, **characterized in that** in step d) the mixing takes place at the joining point where the at least two conduits (1, 2) are joined into a single conduit (3), said joining point being located at close proximity to and preferably directly adjacent to the flow control valve (4) or the flow sensor (5), the distance between said joining point where at least two conduits (1, 2) are joined into a single conduit (3) and said flow control valve (4) or the flow sensor (5) being defined as the ratio of the length to the diameter of the conduit (1, 2) and amounting to maximally 70:1, preferably to maximally 50:1, particularly to maximally 30:1.

14. The process according to any one of the claims 12 to 13,
**characterized in that**
said flow control valve (4) is replaced by a pump or digital hydraulic equipment.

## Revendications

1. Dispositif de mélange pour mélanger au moins deux liquides, comportant au moins deux conduits (1, 2), qui se rejoignent à un point de jonction pour former un conduit (3) unique, **caractérisé en ce qu'**au moins un des conduits (1, 2) a une soupape (4) de réglage et un capteur (5) de débit et **en ce que** ladite soupape (4) de réglage et ledit capteur (5) de débit sont positionnés dans un ordre quelconque et à proximité immédiate l'une par rapport à l'autre, l'écart entre ladite soupape (4) de réglage et ledit capteur (5) de débit étant défini comme le rapport entre la longueur et le diamètre du conduit (1, 2) et étant de 70:1 au maximum, de préférence de 50:1 au maximum et de façon particulièrement préférée de 30:1 au maximum.

2. Dispositif de mélange selon la revendication 1, **caractérisé en ce que** chaque conduit (1, 2) a une soupape (4) de réglage et un capteur (5) de débit et **en ce que** ladite soupape (4) de réglage et ledit capteur (5) de débit sont positionnés dans un ordre quelconque et à proximité immédiate l'une par rapport à l'autre, l'écart entre ladite soupape (4) de réglage et ledit capteur (5) de débit étant défini comme le rapport entre la longueur et le diamètre du conduit (1, 2) et étant de 70:1 au maximum, de préférence de 50:1 au maximum et de façon particulièrement préférée de 30:1 au maximum.

3. Dispositif de mélange selon les revendications 1 ou 2, **caractérisé en ce que** ledit capteur (5) de débit et ladite soupape (4) de réglage sont positionnés dans un ordre quelconque et à proximité immédiate l'un par rapport à l'autre.

4. Dispositif de mélange selon l'une quelconque des revendications précédentes, **caractérisé en ce que** ledit point de jonction, au niveau duquel les au moins deux conduits (1, 2) se rejoignent pour former un conduit unique (3), est situé à proximité immédiate de la soupape (4) de réglage ou du capteur (5) de débit, l'écart entre ladite soupape (4) de réglage et ledit capteur (5) de débit étant défini comme le rapport entre la longueur et le diamètre du conduit (1, 2) et étant de 70:1 au maximum, de préférence de 50:1 au maximum et de façon particulièrement préférée de 30:1 au maximum.

5. Dispositif de mélange selon l'une quelconque des revendications précédentes, **caractérisé en ce que** le point de jonction, au niveau duquel les au moins deux conduits (1, 2) se rejoignent pour former un conduit (3) unique, est directement adjacent à la soupape (4) de réglage ou au capteur (5) de débit.

6. Dispositif de mélange selon l'une quelconque des revendications précédentes, **caractérisé en ce que** le capteur (5) de débit est un compteur volumétrique ou un débitmètre ou un capteur de débit de pression différentielle.

7. Dispositif de mélange selon l'une quelconque des revendications précédentes, **caractérisé en ce qu'**au moins un autre conduit, qui débouche dans le conduit (1, 2) ou le conduit(3), est prévu.

8. Dispositif de mélange selon la revendication 7, **caractérisé en ce qu'**au moins un autre conduit, qui débouche dans le conduit (1, 2) ou le conduit (3), a un capteur (5) de débit et une soupape (4) de réglage, qui sont positionnés dans un ordre quelconque à proximité immédiate et en particulier directement adjacents l'un par rapport à l'autre, l'écart entre ladite soupape (4) de réglage et ledit capteur (5) de débit étant défini comme le rapport entre la longueur et le diamètre du conduit (1, 2) et étant de 70:1 au maximum, de préférence de 50:1 au maximum et de façon particulièrement préférée de 30:1 au maximum.

9. Dispositif de mélange selon la revendication 7, **caractérisé en ce que** le capteur (5) de débit et la soupape (4) de réglage de l'au moins un autre conduit sont positionnés à proximité immédiate du conduit (1, 2) ou du conduit (3) et en particulier directement adjacents l'un par rapport à l'autre, l'écart entre ladite soupape (4) de réglage et ledit capteur (5) de débit ou entre la pompe et le conduit (1, 2) ou le conduit (3) étant défini comme le rapport entre la longueur et le diamètre du conduit (1, 2) ou du conduit (3) et étant de 70:1 au maximum, de préférence de 50:1 au maximum et de façon particulièrement préférée de 30:1 au maximum.

10. Dispositif de mélange selon l'une quelconque des revendications précédentes, **caractérisé en ce que** la soupape (4) de réglage est remplacée par une pompe ou un système hydraulique numérique.

11. Dispositif de mélange selon l'une quelconque des revendications précédentes, **caractérisé en ce qu'**il comprend, en plus :
au moins deux récipients, chacun contenant un liquide,
au moins deux pompes pour transporter les liquides,
une plaque suiveuse pour un récipient, ladite plaque suiveuse étant placée sur la surface du liquide et fermant à étanchéité le récipient correspondant,
les conduits (1, 2) étant reliés en aval des pompes dans la direction de transport.

12. Procédé pour mélanger au moins deux liquides, comportant les étapes suivantes .
a) pompage d'un liquide dans un conduit (1) depuis un récipient,
b) transport dudit liquide à travers le conduit (1) vers un capteur (5) de débit et une soupape (4) de réglage, qui est placée en amont ou en aval dudit capteur de débit dans la direction de transport, le capteur (5) de débit et la soupape (4) de réglage étant montés à l'intérieur du conduit (1) et positionnés dans un ordre quelconque à proximité et en particulier directement adjacents l'un par rapport à l'autre, l'écart entre ladite soupape (4) de réglage et ledit capteur (5) de débit étant défini comme le rapport entre la longueur et le diamètre du conduit (1, 2) et étant de 70:1 au maximum, de préférence de 50:1 au maximum et de façon particulièrement préférée de 30:1 au maximum,
c) réglage du débit moyennant la soupape (4) de réglage,
d) introduction du débit désiré de liquide dans un conduit (3), dans lequel un autre liquide est introduit, qui est amené, par exemple, à travers un autre conduit (2), de la même façon ou d'une façon différente que dans les étapes a) à c), ce qui permet de mélanger lesdits liquides,
e) application du mélange à l'endroit désiré ou introduction du mélange dans un appareil désiré pour un traitement ultérieur.

13. Procédé selon la revendication 12, **caractérisé en ce que** dans l'étape d) est effectué le mélange au niveau du point de jonction, auquel les au moins deux conduits (1, 2) se rejoignent pour former un conduit (3) unique, le point de jonction étant situé à proximité immédiate de la soupape (4) de réglage ou du capteur (5) de débit, l'écart entre ledit point de jonction, auquel les au moins deux conduits (1, 2) se rejoignent pour former un conduit (3) unique, et ladite soupape (4) de réglage ou ledit capteur (5) de débit étant défini comme le rapport entre la longueur et le diamètre du conduit (1, 2) et étant de 70:1 au maximum, de préférence de 50:1 au maximum et de façon particulièrement préférée de 30:1 au maximum, et ledit point de jonction étant situé de préférence directement adjacent à la soupape (4) de réglage ou au capteur (5) de débit.

14. Procédé selon les revendications 12 ou 13, **caractérisé en ce que** la soupape (4) de réglage est remplacée par une pompe ou un système hydraulique numérique.
